(19)

Europäisches
Patentamt
European
Patent Office
Office européen
des brevets

(11)     **EP 2 806 611 A1**

(12)     **EUROPEAN PATENT APPLICATION**

(43) Date of publication:
26.11.2014 Bulletin 2014/48

(51) Int Cl.:
**H04L 27/26** (2006.01)

(21) Application number: 14169198.0

(22) Date of filing: 21.05.2014

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **22.05.2013 US 201313900095**

(71) Applicant: **Nokia Solutions and Networks Oy 02610 Espoo (FI)**

(72) Inventors:
- **Thomas, Timothy**
  **Palatine, IL Illinois 60074 (US)**
- **Mondal, Bishwarup**
  **Beavercreek, OH Ohio 45430 (US)**

(54)     **Offset estimation using channel state information reference symbols and demodulation reference symbols**

(57)     A method and apparatus can be configured to receive at least one channel state information reference symbol. The method can also include determining a negative timing offset estimate and a positive timing offset estimate. The negative timing offset estimate and the positive timing offset estimate are based on the at least one channel state information reference symbol. The method can also include receiving a demodulation reference symbol. The method can also include selecting either the negative timing offset estimate or the positive timing offset estimate based on the demodulation reference symbol.

Fig. 7

**Description**

BACKGROUND:

**Field:**

Embodiments of the invention relate to using channel state information reference symbols (CSI-RS) together with demodulation reference symbols (DM-RS) to estimate offsets.

**Description of the Related Art:**

Long-term Evolution (LTE) is a standard for wireless communication that seeks to provide improved speed and capacity for wireless communications by using new modulation/signal processing techniques. The standard was proposed by the 3rd Generation Partnership Project (3GPP), and is based upon previous network technologies. Since its inception, LTE has seen extensive deployment in a wide variety of contexts involving the communication of data.

SUMMARY:

According to first embodiment, a method may comprise receiving at least one channel state information reference symbol. The method may also comprise determining a negative timing offset estimate and a positive timing offset estimate. The negative timing offset estimate and the positive timing offset estimate are based on the at least one channel state information reference symbol. The method also comprises receiving a demodulation reference symbol. The method also comprises selecting either the negative timing offset estimate or the positive timing offset estimate based on the demodulation reference symbol.

In the method of the first embodiment, the negative timing offset estimate is in a first range corresponding to $[t_{max-}, 0]$, and the positive timing offset estimate is in a second range corresponding to $[0, t_{max+}]$, where $[t_{max-}, t_{max+}]$ determines a maximum timing range.

In the method of the first embodiment, $t_{max-}$ can be -5.55 usec, and $t_{max+}$ can be 5.55 usec.

In the method of the first embodiment, the selecting either the negative timing offset estimate or the positive timing offset estimate is based upon comparing a first mean square error corresponding to the negative timing offset estimate and a second mean square error corresponding to the positive timing offset estimate.

In the method of the first embodiment, the determining the negative timing offset estimate and the positive timing offset estimate comprises removing a pilot sequence across frequency and undoing a Walsh spreading between port pairs.

In the method of the first embodiment, the determining the negative timing offset estimate and the positive timing offset estimate comprises obtaining at least one power delay profile, finding peaks of the at least one power delay profile. The negative timing offset estimate and the positive timing offset estimate are associated with the peaks.

According to a second embodiment, an apparatus may comprise at least one processor. The apparatus can also comprise at least one memory including computer program code. The at least one memory and the computer program code can be configured, with the at least one processor, to cause the apparatus at least to receive at least one channel state information reference symbol. The apparatus can also determine a negative timing offset estimate and a positive timing offset estimate. The negative timing offset estimate and the positive timing offset estimate are based on the at least one channel state information reference symbol. The apparatus can also receive a demodulation reference symbol. The apparatus can also select either the negative timing offset estimate or the positive timing offset estimate based on the demodulation reference symbol.

In the apparatus of the second embodiment, the negative timing offset estimate is in a first range corresponding to $[t_{max-}, 0]$, and the positive timing offset estimate is in a second range corresponding to $[0, t_{max+}]$, where $[t_{max-}, t_{max+}]$ determines a maximum timing range.

In the apparatus of the second embodiment, $t_{max-}$ can be -5.55 usec, and $t_{max+}$ can be 5.55 usec.

In the apparatus of the second embodiment, the selecting either the negative timing offset estimate or the positive timing offset estimate is based upon comparing a first mean square error corresponding to the negative timing offset estimate and a second mean square error corresponding to the positive timing offset estimate.

In the apparatus of the second embodiment, the determining the negative timing offset estimate and the positive timing offset estimate comprises removing a pilot sequence across frequency and undoing a Walsh spreading between port pairs.

In the apparatus of the second embodiment, the determining the negative timing offset estimate and the positive timing offset estimate comprises obtaining at least one power delay profile, finding peaks of the at least one power delay profile, wherein the negative timing offset estimate and the positive timing offset estimate are associated with the peaks.

According to a third embodiment, a computer program product can be embodied on a computer readable medium. The computer program product can be configured to control a processor to perform a process comprising receiving at least one channel state information reference symbol. The process can also comprise determining a negative timing offset estimate and a positive timing offset estimate. The negative timing offset estimate and the positive timing offset estimate are based on the at least one channel state information reference symbol. The process can also comprise receiving a demodulation reference symbol. The process can also comprise selecting either the negative timing offset estimate or the positive timing offset estimate based on the demodulation reference symbol.

According to a fourth embodiment, a method can comprise receiving at least one channel state information reference symbol. The method can also comprise determining a negative timing offset estimate and a positive timing offset estimate. The negative timing offset estimate and the positive timing offset estimate are based on the at least one channel state information reference symbol. The method can also comprise determining a received signal-to-noise ratio. The method can also comprise deciding whether or not to use a demodulation reference symbol to select either the negative timing offset estimate or the positive timing offset estimate. The deciding is based on whether the signal-to-noise ratio is greater than a predetermined value.

In the method of the fourth embodiment, the predetermined value can be 0 dB.

In the method of the fourth embodiment, the negative timing offset estimate can be in a first range corresponding to $[t_{max-}, 0]$, and the positive timing offset estimate can be in a second range corresponding to $[0, t_{max+}]$, where $[t_{max-}, t_{max+}]$ determines a maximum timing range.

In the method of the fourth embodiment, $t_{max-}$ can be -5.55 usec, and $t_{max+}$ can be 5.55 usec.

In the method of the fourth embodiment, the determining the negative timing offset estimate and the positive timing offset estimate comprises removing a pilot sequence across frequency and undoing a Walsh spreading between port pairs.

According to a fifth embodiment, an apparatus comprises at least one processor. The apparatus can also comprise at least one memory including computer program code. The at least one memory and the computer program code can be configured, with the at least one processor, to cause the apparatus at least to receive at least one channel state information reference symbol. The apparatus can also determine a negative timing offset estimate and a positive timing offset estimate. The negative timing offset estimate and the positive timing offset estimate are based on the at least one channel state information reference symbol. The apparatus can also determine a received signal-to-noise ratio. The apparatus can also decide whether or not to use a demodulation reference symbol to select either the negative timing offset estimate or the positive timing offset estimate. The deciding is based on whether the signal-to-noise ratio is greater than a predetermined value.

In the apparatus of the fifth embodiment, the predetermined value can be 0 dB.

In the apparatus of the fifth embodiment, the negative timing offset estimate can be in a first range corresponding to $[t_{max-}, 0]$, and the positive timing offset estimate can be in a second range corresponding to $[0, t_{max+}]$, where $[t_{max-}, t_{max+}]$ determines a maximum timing range.

In the apparatus of the fifth embodiment, $t_{max-}$ can be -5.55 usec, and $t_{max+}$ can be 5.55 usec.

In the apparatus of the fifth embodiment, the determining the negative timing offset estimate and the positive timing offset estimate comprises removing a pilot sequence across frequency and undoing a Walsh spreading between port pairs.

According to a sixth embodiment, a computer program product can be embodied on a computer readable medium. The computer program product can be configured to control a processor to perform a process comprising receiving at least one channel state information reference symbol. The process can also comprise determining a negative timing offset estimate and a positive timing offset estimate, wherein the negative timing offset estimate and the positive timing offset estimate are based on the at least one channel state information reference symbol. The process can also comprise determining a received signal-to-noise ratio. The process can also comprise deciding whether or not to use a demodulation reference symbol to select either the negative timing offset estimate or the positive timing offset estimate, wherein the deciding is based on whether the signal-to-noise ratio is greater than a predetermined value.

BRIEF DESCRIPTION OF THE DRAWINGS:

For proper understanding of the invention, reference should be made to the accompanying drawings, wherein:

Fig. 1 illustrates an example configuration of coordinated multi-point scenario 4.

Fig. 2 illustrates, according to one embodiment, different CSI-RS locations within a frequency band.

Fig. 3 illustrates an inverse fast-Fourier transform of noisy channel estimates, at a single time instance, in accordance with one embodiment.

Fig. 4 illustrates computing a power-delay profile in accordance with one embodiment.

Fig. 5 illustrates finding peaks in accordance with one embodiment.

Fig. 6 illustrates, according to one embodiment, different DM-RS locations within a frequency band.

Fig. 7 illustrates a logic flow diagram of a method according to an embodiment.

Fig. 8 illustrates an apparatus according to an embodiment.

Fig. 9 illustrates an apparatus according to another embodiment.

Fig. 10 illustrates an apparatus according to another embodiment.

DETAILED DESCRIPTION:

Quasi co-location (QCL) generally means that a user equipment (UE) can associate multiple resources for the purpose of performing timing synchronization and tracking. These resources can include common reference symbols (CRS), channel state information reference symbols (CSI-RS), and demodulation reference symbols (DM-RS). The UE can use these resources to perform timing synchronization and tracking. For example, the UE might be signaled from a network where CSI-RS and DM-RS are quasi co-located and, hence, the UE may derive timing synchronization from CSI-RS and assume that the same timing reference can be used for DM-RS.

Channels measured from resources that are quasi co-located with respect to each other share similarities. For example, one channel (e.g., as measured from CSI-RS) may have a similar delay spread, a similar Doppler spread, a similar Doppler shift, a similar average delay, and/or a similar average gain as compared to another quasi co-located channel (e.g., as measured from DM-RS).

In Long-Term Evolution Release 10 (LTE Release 10), there is a coordinated multi-point (CoMP) scenario (scenario 4) where multiple transmission points (TPs) share a same cell identification (ID). A TP can be assumed to be a set of co-located antennas. Each sector in a macro area or a remote-radio-head (RRH) can be considered a TP.

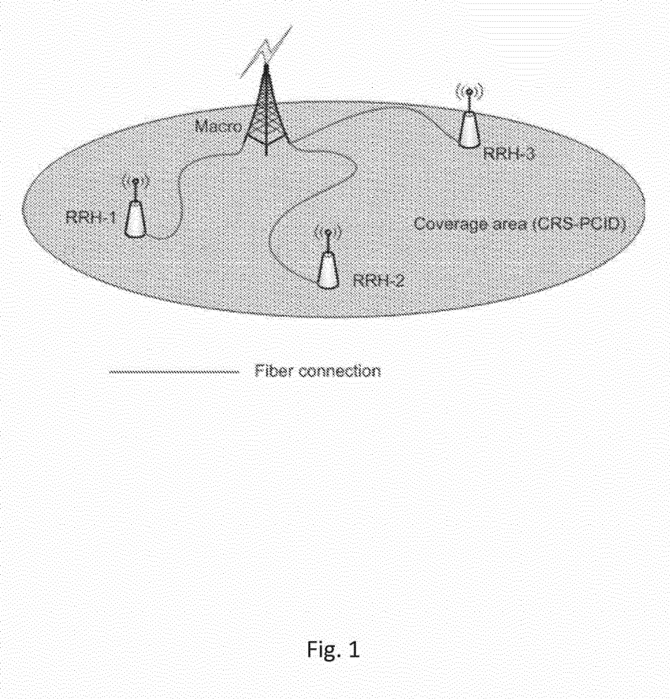

Fig. 1 illustrates an example configuration of coordinated multi-point scenario 4. In this example, the configuration includes a macro base station as well as three remote radio heads (RRH-1, RRH-2, and RRH-3). The macro base station can be connected via a fiber connection to each of the three remote radio heads. A common coverage area can be determined by a common reference symbol (CRS) transmitted by one or more nodes. The macro base station and each of the RRHs can serve as individual transmission points.

As described above, the TPs can transmit resources via different quasi co-located channels to be received by the UE. In other words, in one embodiment, multiple TPs can transmit in the same cell. In this scenario, there is generally one dominant TP which transmits symbols such as a primary synchronization symbol (PSS), a secondary synchronization symbol (SSS), and common reference symbols (CRS), for example. The dominant TP can be a macro TP, for example. A user equipment (UE) within the cell can synchronize its timing offset to this dominant TP upon receiving the transmissions of the dominant TP.

After the UE synchronizes its timing offset to the dominant TP, the UE may later wish to receive transmissions from a second TP different than the dominant TP. A CoMP method of dynamic cell selection (DCS) can be used to allow the UE to receive transmissions from the second TP different than the dominant TP.

However, even if the UE wishes to receive transmissions from the second TP, the UE might not be synchronized with the second TP. Specifically, even if the UE has synchronized its timing offset with the dominant TP, it is possible for the UE to not be synchronized to the other TP. A UE that is synchronized to a dominant TP may not be synchronized with the second TP because the LTE specification that governs the synchronization of UEs to TPs may only guarantee that two TPs are time synchronized within +/- 3 usec, and frequency synchronized to within +/- 100 Hz offset at 2 GHz. Therefore, because different TPs may not be synchronized with each other with respect to time or frequency, a UE that is synchronized to one TP may not be synchronized to the other TP. Therefore, a UE that is synchronized to the dominant TP may not be synchronized to the second TP. When receiving transmissions from the second TP, the increased frequency selectivity caused by the timing offset can degrade the performance of the received signal, especially when using wideband feedback techniques which assume minimal channel variations. In addition, those offsets could significantly degrade channel estimation performance, as will be described below.

As described above, as a UE receives transmissions from both a dominant TP and a second TP, there may be a difference in the received timing between the two TPs. Certain channel conditions (such as a delay and Doppler spread associated with the channel) plus the propagation delay difference can further add to the aforementioned difference. Therefore, in one embodiment, the downlink signal (transmitted by the second TP) to a UE may be represented as:

$$\mathbf{y}(k,b) = e^{-j2\pi k\Delta_T / N_F} e^{j2\pi b\Delta_F T} \mathbf{H}_2(k,b)\mathbf{v}_2 x(k,b)$$

In the equation above, "k" can be considered to be a subcarrier number (i.e., frequency bin), "b" can be an orthogonal frequency-division multiplexing (OFDM) symbol number (i.e., a time index), $H_2(k,b)$ can be a $M_R x M_T$ channel to a second (DCS/attached) TP, $M_R$ can be the number of receiving antennas at the UE, $M_T$ can be a number of transmitting antennas at the second TP, $v_2$ can be a wideband transmit weight for the second TP, $\Delta_T$ can be a timing offset of the second TP relative to the dominant TP in a number of samples, $N_F$ can be a fast-Fourier transform size, $\Delta_F$ can be a frequency offset in hertz (Hz) of the second TP relative to the dominant TP, and $T$ can be an OFDM symbol time. For example, the OFDM symbol time can be 71.249 usec in LTE, and $x(k,b)$ can be the transmitted symbol.

In one embodiment, estimation of channel characteristics can be performed using DM-RS. However, because channel estimation typically assumes no timing offset, timing offsets can degrade channel estimation using DM-RS unless their effects are compensated for beforehand. For example, a 3 usec timing offset essentially appears as a shift of the time-domain channel of 92 samples in a 20 MHz LTE system. This offset will create a significant increase in the variations of the channel seen across the frequency band for a DM-RS allocation which consists of 12 subcarriers. Channel estimators for DM-RS are not designed to expect channel variations that are this high, and thus it would result in a much higher channel estimation error than with no timing offset, and then the consequence would be a throughput degradation when decoding the data. Worse yet would be a -3 usec offset which shifts the bulk of the time-domain channel into a negative delay region which is completely unexpected by the channel estimators. This condition would generally result in significant channel estimation errors.

Therefore, one embodiment of the present invention is directed to estimating the timing offset between a second TP and a dominant TP, and removing the unwanted effects caused by the offset before the decoding of a dynamic cell selection (DCS) signal received by the UE. Basically, by removing the unwanted effects it is meant that the timing offset is estimated and then removed from the received signal. For example, assuming that the timing offset estimate is dt, then the removal of the unwanted effects could be done as follows:

$$\tilde{\mathbf{y}}(k,b) = e^{j2\pi k d_t / N_F} e^{-j2\pi b d_f T} \mathbf{y}(k,b)$$

In this way, the timing offsets could be removed if the estimates equal the actual values. Then, all of the normal receive process is done on $\tilde{y}(k,b)$, assuming no timing offset is present (or minimal offsets are present). As such, one embodiment uses a combination of CSI-RS and DM-RS because CRS may not be able to be transmitted by the second TP to the UE (for example, in scenario 4, only the dominant TP transmits CRS). Embodiments of the present invention can also be useful when the CRS is corrupted by strong interference, which may likely occur in normal CoMP situations or when biasing is used to attach more UEs to pico-cells. It should be noted that frequency offset may also be removed in addition to timing offset. In this case, assume that the frequency offset estimate is first obtained and is represented by the variable df. Then the removal of both timing and frequency offset could be done as:

$$\tilde{\mathbf{y}}(k,b) = e^{j2\pi k d_t / N_F} e^{-j2\pi b d_f T} \mathbf{y}(k,b)$$

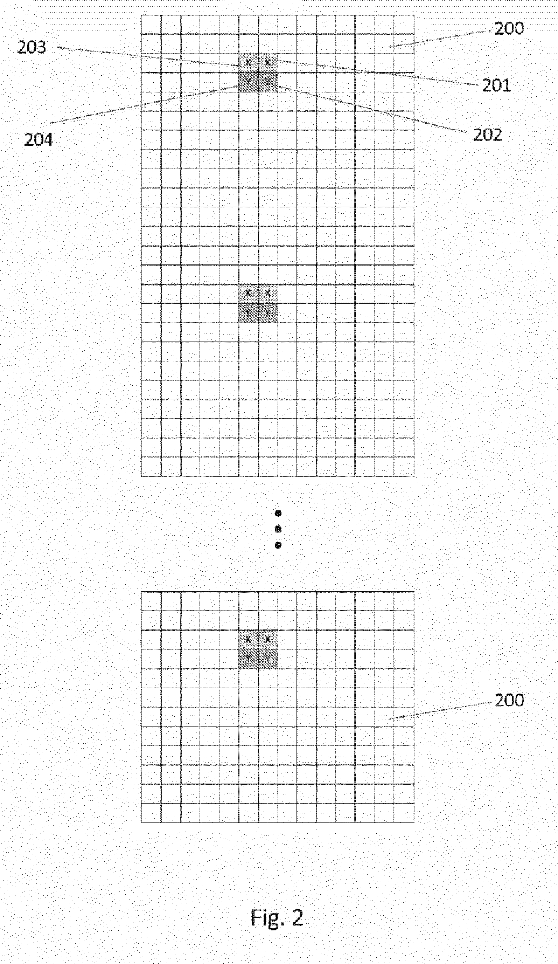

Figure 2 illustrates, according to one embodiment, different CSI-RS locations within a frequency band 200. The y-axis corresponds to a representation of different frequencies. The x-axis corresponds to a representation of different times. The different locations within the frequency band 200 can also be referred to as subcarrier locations, and the different locations within the band 200 can also be referred to as OFDM symbols. Location X (201, 203) is designated for ports 0 and 1 to send CSI-RS, and location Y (202, 204) is designated for ports 2 and 3 to send CSI-RS. The subcarrier locations that are designated for sending CSI-RS can be considered to be pilot locations. Ports 0-3 can correspond to transmitters, such as antennas of base stations, for example. Any of ports 0-3 can correspond to the above-described dominant TP and the second TP. Two ports sharing the same resource elements (REs) are separated by using a Walsh spreading of [1, 1] (in time) for one port and [1, -1] for the other port.

When using only frequency-domain CSI-RS to estimate a timing offset, the density of the pilot locations limits the range of estimation for the timing offsets. Referring to the example as shown in Fig. 2, the density of the pilot locations relative to the total subcarrier locations of frequency band 200 is one subcarrier with a pilot location for every twelve subcarriers. This pilot spacing will generally limit the range of timing offsets that can be estimated based on the Nyquist sample criteria. For example, a sampling of pilots of one every twelve in frequency results in timing offsets between -2.77 and +2.77 usec being able to be estimated assuming the LTE subcarrier spacing of 15 kHz (2.77 usec = 0.5/(12 x 15000)). If it is assumed that the timing offsets are all positive, then the range can be from 0 to 5.55 usec (where 5.55 usec = 1/(12 x 15000)), and, if the timing offsets can be all negative, then the range can be from -5.55 usec to 0.

In one embodiment, timing offsets can be estimated in one of the following three ranges: [-5.55,0] usec, [-2.77,+2.77] usec, or [0,+5.55] usec. As described above, these ranges can be established by the Nyquist sampling criteria that is used. However, with the above ranges, estimating a timing offset to a specificity of +/- 3 usec is problematic because +/- 3 usec is outside of the above-defined ranges. For example, any additional delay spread will further degrade the performance of estimating the timing offset.

In view of the above, one embodiment is a method of obtaining the timing offset from a CSI-RS transmitted from the second TP to the UE. First, a pilot sequence across a frequency can be removed. Assuming that $x_m(k,b)$ is a pilot symbol for port m, then removing it can be done by dividing it out from y(k,b), or by multiplying by the conjugate of the pilot symbol if $x_m(k,b)$ is constant modulus (as in LTE) as follows:

$$\mathbf{z}_m(k,b) = \mathbf{y}(k,b)x_m^*(k,b)$$

where $z_m(k,b)$ can be thought of as a pre-spread noisy channel estimate for transmit port m (note that $z_m(k,b)$ is $M_R$x1, meaning that it is the pre-spread noisy channel estimate for each receiving antenna at the UE). Any Walsh spreading between port pairs is undone to get a noisy frequency-domain channel estimate for all ports. As such, a noisy frequency domain channel estimate can be determined as: $\mathbf{h}_m(k,b) = \mathbf{z}_m(k,b) + \mathbf{z}_m(k,b+1)$ for even m, and $\mathbf{h}_m(k,b)=\mathbf{z}_m(k,b)-\mathbf{z}_m(k,b+1)$ for odd m, assuming b is the OFDM symbol time of the first CSI-RS location in time (203 or 204) and b+1 is the OFDM symbol time of the second CSI-RS location in time (201 and 202).

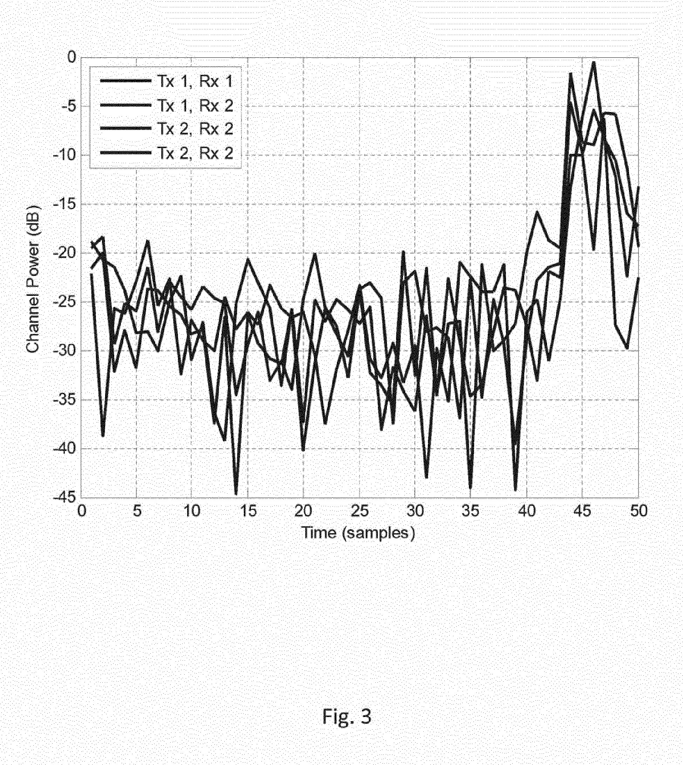

Fig. 3 illustrates an inverse fast-Fourier transform of noisy channel estimates, at a single time instance, in accordance with one embodiment. In one embodiment, after a method receives, by a user equipment, transmissions from antennas, the method takes an inverse fast-Fourier transform (IFFT) of the noisy frequency-domain channel estimates for each port. For example, in one embodiment, the IFFT is a 50-point IFFT for 10 MHz LTE), as shown in Fig. 3, for a SCM (spatial channel model) urban-macro environment with a -1.0 usec timing offset of the second TP relative to the first TP for a second TP with 2 transmit (Tx) antennas and a UE with 2 receive (Rx) antennas. Although one embodiment may use a 50-point IFFT, other embodiments can use a different number of points. As such, a time domain channel estimate can be determined. The method obtains a power-delay profile (PDP) estimate by averaging over all transmitting antennas (i.e., CSI-RS ports) and all receiving antennas to get an average PDP. The PDP can be averaged over multiple CSI-RS transmissions in time (which may be present, for example, every 5 msec).

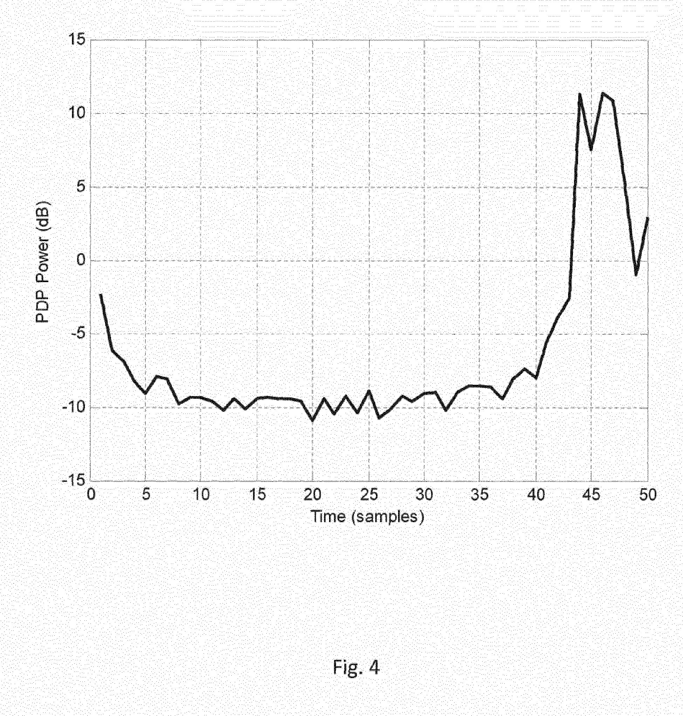

Fig. 4 illustrates computing a power-delay profile in accordance with one embodiment. Referring to Fig. 4, the averaging is performed over 10 time samples in addition to across the antennas. One embodiment can then determine a plurality of peaks of the average PDP. For example, one embodiment can find 4 peaks of the average PDP which are greater than 4 x max($\sigma^2$, 1) where $\sigma^2$ is the noise power. In other words, one embodiment determines the larger value between $\sigma^2$ and 1, and multiplies this larger value by 4. If no peaks are greater than 4 x max($0^2$, 1), then a largest peak is chosen.

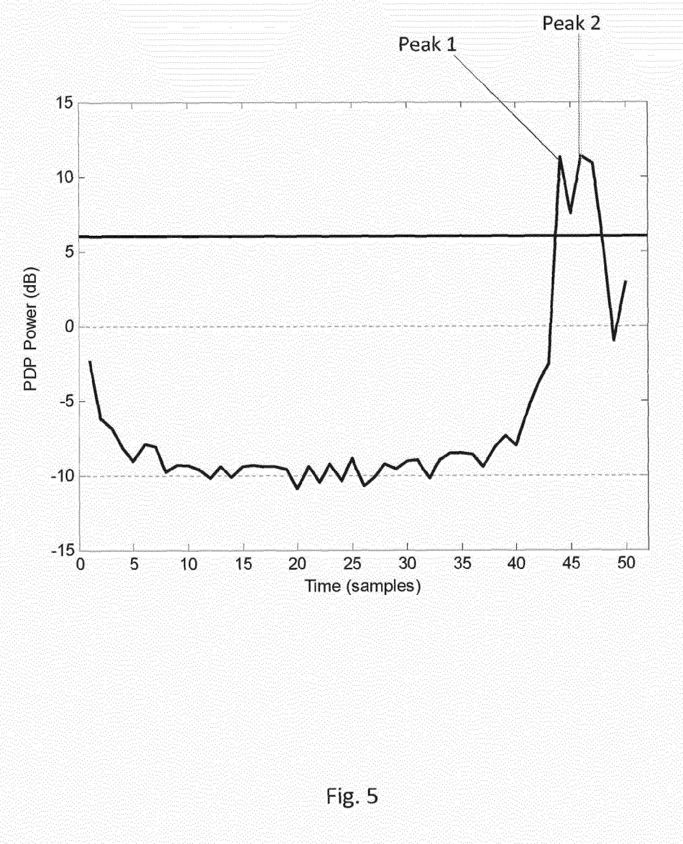

Fig. 5 illustrates finding peaks in accordance with one embodiment. In the example shown in Fig. 5, two peaks of the average PDP meet the criteria of being greater than 4 times the maximum between a noise floor or 1. In another embodiment, for each selected peak, the method finds an average power for the time samples to the left of each peak. For example, in one embodiment, an average power is found for 25 time samples to the left of each peak. Although one embodiment can use 25 time samples, based on using a 50-point IFFT, other embodiments can use a different number of time samples based on a different number of points used for the IFFT. The timing estimate can be the time associated with the peak with the lowest power found. For example, referring to Fig. 5, the first peak would be chosen since it would have the lowest average power for the 25 time samples to the left of the peak. In this way, the probable first peak of the PDP is chosen.

By performing the above-described method, one embodiment finds the first peak of the average PDP which is characterized by having low power to the left (i.e., negative times) of the peak.

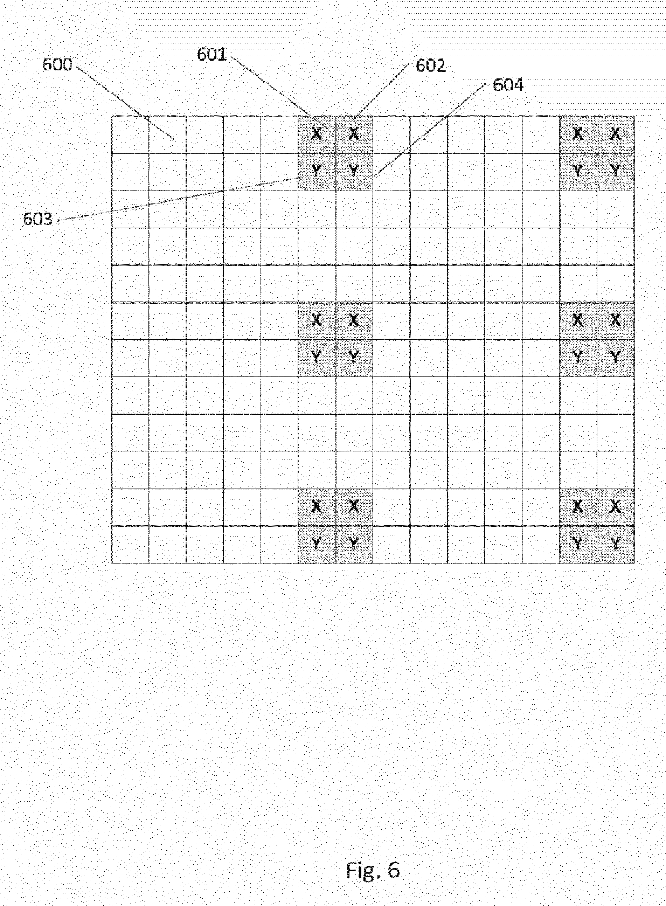

Figure 6 illustrates, according to one embodiment, different DM-RS locations within a frequency band 600. The y-axis corresponds to a representation of different frequencies, and the x-axis corresponds to a representation of different times. In contrast to Fig. 2 that shows CSI-RS locations, Fig. 6 shows DM-RS locations within the frequency band. Location X (601, 602) is designated for a first pair of DM-RS ports and location Y (603, 604) is designated for a second pair of DM-RS ports. Two ports sharing the same REs are separated by using a Walsh spreading of [1, 1] (in time) for one port and [1, -1] for the other port. These two ports most likely are not the same ports as the CSI-RS which are usually physical antenna ports. The DM-RS ports are typically beamformed ports, meaning they are a combination of the signals sent from multiple CSI-RS ports, for example, by using the aforementioned beamforming weight, $v_2$, to weight and sum a common signal sent from the CSI-RS ports.

The DM-RS has pilots from common ports sent every 5th subcarrier which increases the density over CSI-RS which can help estimate a timing offset with an improved range over CSI-RS. For example, using the Nyquist criteria and assuming the LTE subcarrier spacing of 15 kHz, the DM-RS can estimate timing offsets in the range of -6.67 to +6.67 usec. However, because the DM-RS is often not sent over the entire band (e.g., 20 MHz), the timing estimates obtained from DM-RS can be very inaccurate (especially when only a single DM-RS allocation is available which is just 12 subcarriers in frequency). Hence, it is often best to use CSI-RS which is sent over all 20 MHz to get an accurate timing estimate in two ranges, [-5.55, 0] usec and [0, 5.55] usec, and then use DM-RS to distinguish between the two.

As described above, CSI-RS can be used to determine two timing offset estimates, a negative timing estimate in the range corresponding to [-5.55, 0] usec and a positive timing estimate in the range corresponding to [0, 5.55] usec. To determine the two timing estimates, one embodiment can use the above-described procedure or could otherwise use any method of obtaining the estimates of timing offset from the CSI-RS. Then, the DM-RS can be used to decide between the negative and positive timing ranges. In other words, the DM-RS can be used to select either the negative or the positive timing ranges. Obtaining a good timing offset estimate from DM-RS alone can be difficult because the DM-RS is beamformed, and the UE can assume that the beamforming changes across frequency from PRB to PRB (a PRB in LTE is a physical resource block and refers to a scheduling granularity of 12 subcarriers by 14 OFDM symbols). So, the UE may not be able to reliably multiplex many PRBs together to get a good timing offset estimate (assuming that the UE has scheduled many PRBs in the first place). By multiplexing, it is generally meant to use the DM-RS of multiple PRBs in frequency to get a timing offset estimate. On the other hand, CSI-RS is wideband, and hence is able to get a very fine timing offset (at least as low as the sample rate).

One embodiment performs the above-described method for the negative timing offset range corresponding to [-0.55, 0] usec as well as for the positive timing offset range corresponding to [0, 0.55] usec. Upon performing the above-described methods for each of the timing offset ranges, two different timing offset estimates can be determined, d- for the negative timing offset range, and d[+] for the positive timing offset range.

After the different timing offset estimates are determined, a method can be performed on each timing offset estimate to determine a mean-squared-error (MSE) value for each timing offset estimate, as described in more detail below. MSE[+] can be considered to be the mean-squared-error value for the positive timing offset. MSE- can be considered to be the mean-squared-error value for the negative timing offset. In view of the above, one embodiment receives a DM-RS transmission as follows:

$$\mathbf{y}(k,b) = e^{-j2\pi k\Delta_T / N_F} e^{j2\pi b\Delta_F T} \mathbf{H}_2(k,b)\mathbf{v}_2 x(k,b).$$

One embodiment corrects the timing offset of the DM-RS using the positive timing estimate, d[+], (i.e., the estimate corresponding to / assuming a range of [0, 5.55] usec) obtained from the CSI-RS as follows:

$$\widetilde{\mathbf{y}}(k,b) = e^{j2\pi k d^+ / N_F} \mathbf{y}(k,b)$$

and gets a channel estimate of $H_2(k,b)v_2$, $h^+(k,b)$, (e.g., a minimum mean-square error (MMSE) channel estimate that operates on a per-PRB basis) using $\widetilde{y}(k,b)$ for all DM-RS symbol locations over the PRBs (i.e., the locations in Fig. 6). One embodiment then determines the MSE, such as MSE[+], which is the MSE between the channel estimate multiplied by the pilot symbol and the received pilot symbols as follows:

$$MSE^+ = \sum_{k \in \mathrm{K}, b \in \mathrm{B}} \left( \widetilde{\mathbf{y}}(k,b) - \mathbf{h}^+(k,b) x(k,b) \right)$$

where K is the set of subcarriers within the PRB with DM-RS and B is the set of OFDM symbols within the PRB with DM-RS (e.g., X or Y locations in Fig. 6). The above formula for MSE+ assumes only a single DM-RS port, but, because two DM-RS pilots may be multiplexed together with a spreading sequence (as shown in Fig. 6, for example), the MSE may be between the received pilot symbols plus the sum (or difference) of the channel estimates multiplied by the pilot symbols. In another embodiment, the pilot symbols may be detected with receive weights calculated from the channel estimate assuming the positive timing offset, and then MSE[+] is the average (over the PRB) mean square error between the known pilot symbols and the estimated pilot symbols.

One embodiment corrects the timing offset on the DM-RS using the negative timing estimate, d⁻, (i.e., the one found assuming a range of [-5.55, 0] usec) obtained from the CSI-RS as follows:

$$\widetilde{\mathbf{y}}(k,b) = e^{j2\pi k d^- / N_F} \mathbf{y}(k,b)$$

and gets a channel estimate of $H_2(k,b)v_2$, h-(k,b), (e.g., a MMSE channel estimate that operates on a per-PRB basis). Then, one embodiment determines the mean squared error (MSE), called MSE⁻, which is the MSE between the channel estimate multiplied by the pilot symbol and the received pilot symbols as follows:

$$MSE^- = \sum_{k \in \mathrm{K}, b \in \mathrm{B}} \left( \widetilde{\mathbf{y}}(k,b) - \mathbf{h}^-(k,b)x(k,b) \right)$$

The above formula for MSE- assumes a single DM-RS port, but because two DM-RS pilots may be multiplexed together with a spreading sequence, the MSE may have to be between the received pilot symbols plus the sum (or difference) of the channel estimates multiplied by the pilot symbols. In another embodiment, the pilot symbols may be detected with receive weights calculated from the channel estimate, assuming the positive timing offset and then MSE- is the average (over the PRB) mean square error between the known pilot symbols and the estimated pilot symbols. One embodiment chooses the positive timing estimate if MSE⁺<MSE⁻, otherwise the negative timing estimate is chosen.

In one embodiment, the UE can choose between CSI-RS only timing offset estimation and CSI-RS plus DM-RS timing offset estimation based on the signal-to-noise ratio (SNR). For example, CSI-RS plus DM-RS is used for SNRs greater than 0 dB. For this method, any means of timing offset estimation for the CSI-RS can be used (i.e., to get a positive timing offset estimate in the range [0, +5.55] usec and a negative timing offset estimate in the range [-5.55, 0] usec, and any method of deciding between the positive and negative timing estimate using the DM-RS can be used. One embodiment uses CSI-RS plus DM-RS as opposed to using only CSI-RS.

When using both CSI-RS plus DM-RS, one embodiment provides a way to increase the range of timing estimation. In a first step, CSI-RS can be used to determine multiple timing estimates corresponding to different ranges. In a second step, one of the timing estimates is chosen using DM-RS.

One embodiment of the present invention allows the UE to perform estimation of timing offset between two TPs when the UE is timing synchronized to the first TP, and there is a timing offset to the second TP. One embodiment of the invention is used when the data transmission is from the second TP and the second TP cannot transmit CRS (nor PSS nor SSS) to the UE (e.g., for DCS CoMP in scenario 4) or is unreliable (e.g., a high bias is used in HetNet deployments). One embodiment is directed to a method for timing estimation for CSI-RS. One embodiment is directed to a timing estimation algorithm for DM-RS plus CSI-RS. One embodiment is directed to a method for deciding when to use CSI-RS only or to use CSI-RS plus DM-RS.

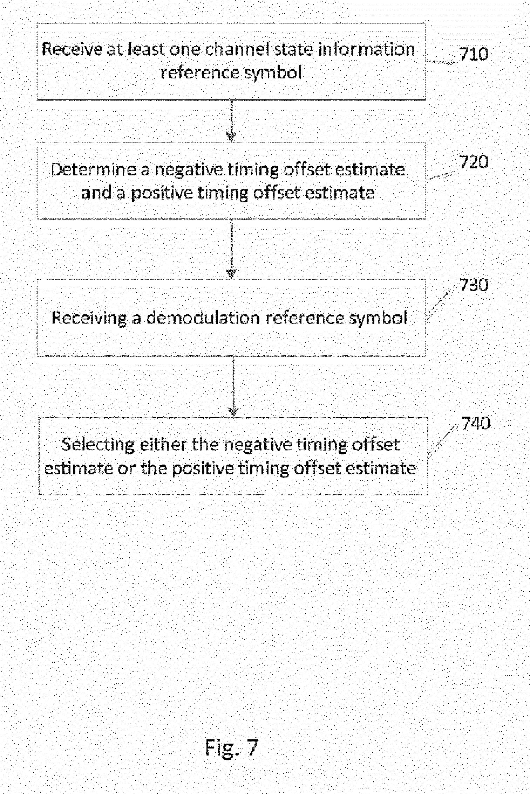

Fig. 7 illustrates a logic flow diagram of a method according to an embodiment. The method illustrated in Fig. 7 includes, at 710, receiving at least one channel state information reference symbol. At 720, one embodiment determines a negative timing offset estimate and a positive timing offset estimate. The negative timing offset estimate and the positive timing offset estimate are based on the at least one channel state information reference symbol. At 730, one embodiment receives a demodulation reference symbol. At 740, one embodiment selects either the negative timing offset estimate or the positive timing offset estimate based on the demodulation reference symbol.

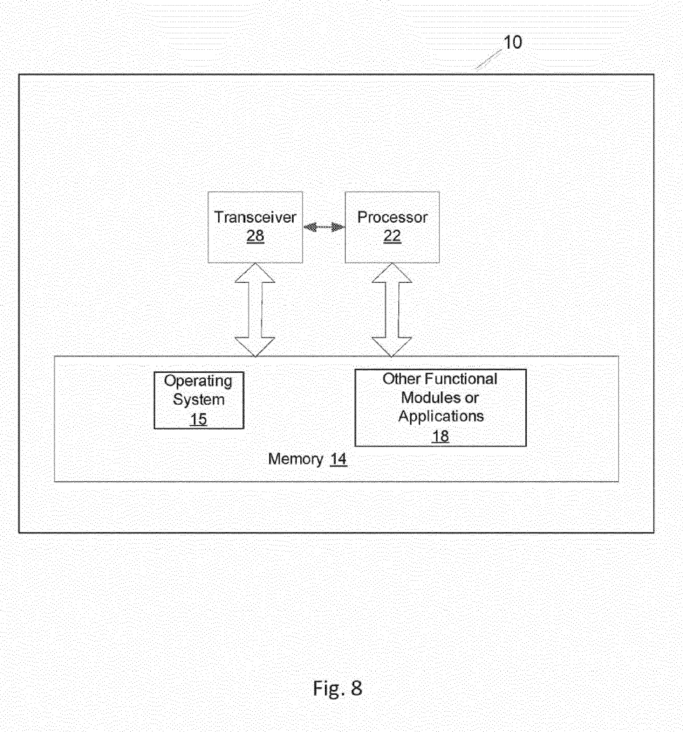

Fig. 8 illustrates an apparatus 10 according to another embodiment. In an embodiment, apparatus 10 can be a receiving device, such as a UE, for example.

Apparatus 10 can include a processor 22 for processing information and executing instructions or operations. Processor 22 can be any type of general or specific purpose processor. While a single processor 22 is shown in Fig. 8, multiple processors can be utilized according to other embodiments. Processor 22 can also include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples.

Apparatus 10 can further include a memory 14, coupled to processor 22, for storing information and instructions that can be executed by processor 22. Memory 14 can be one or more memories and of any type suitable to the local application environment, and can be implemented using any suitable volatile or nonvolatile data storage technology such as a semiconductor-based memory device, a magnetic memory device and system, an optical memory device and system, fixed memory, and removable memory. For example, memory 14 can be comprised of any combination of random access memory (RAM), read only memory (ROM), static storage such as a magnetic or optical disk, or any other type of non-transitory machine or computer readable media. The instructions stored in memory 14 can include program instructions or computer program code that, when executed by processor 22, enable the apparatus 10 to perform tasks as described herein.

Apparatus 10 can also include one or more antennas (not shown) for transmitting and receiving signals and/or data to and from apparatus 10. Apparatus 10 can further include a transceiver 28 that modulates information on to a carrier waveform for transmission by the antenna(s) and demodulates information received via the antenna(s) for further processing by other elements of apparatus 10. In other embodiments, transceiver 28 can be capable of transmitting and receiving signals or data directly.

Processor 22 can perform functions associated with the operation of apparatus 10 including, without limitation, precoding of antenna gain/phase parameters, encoding and decoding of individual bits forming a communication message, formatting of information, and overall control of the apparatus 10, including processes related to management of communication resources.

In an embodiment, memory 14 stores software modules that provide functionality when executed by processor 22. The modules can include an operating system 15 that provides operating system functionality for apparatus 10. The memory can also store one or more functional modules 18, such as an application or program, to provide additional functionality for apparatus 10. The components of apparatus 10 can be implemented in hardware, or as any suitable combination of hardware and software.

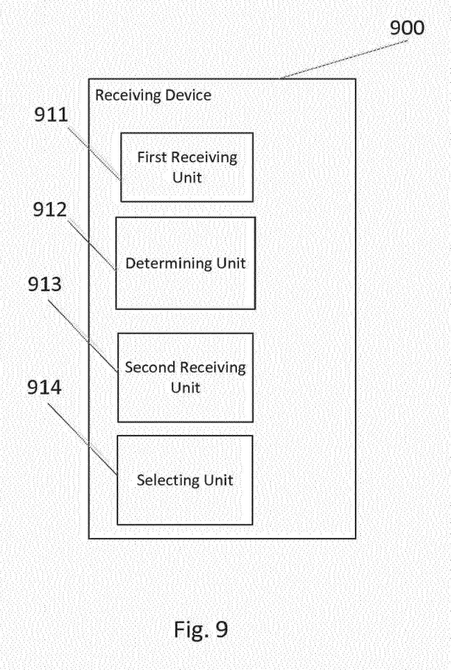

Fig. 9 illustrates an apparatus 900 according to another embodiment. In an embodiment, apparatus 900 can be a receiving device. Apparatus 900 can include a first receiving unit 911 that receives at least one channel state information reference symbol. Apparatus 900 can also include a determining unit 912 that determines a negative timing offset estimate and a positive timing offset estimate. The negative timing offset estimate and the positive timing offset estimate are based on the at least one channel state information reference symbol. Apparatus 900 can also include second receiving unit 913 that receives a demodulation reference symbol. Apparatus 900 can also include a selecting unit 914 that selects either the negative timing offset estimate or the positive timing offset estimate based on the demodulation reference symbol.

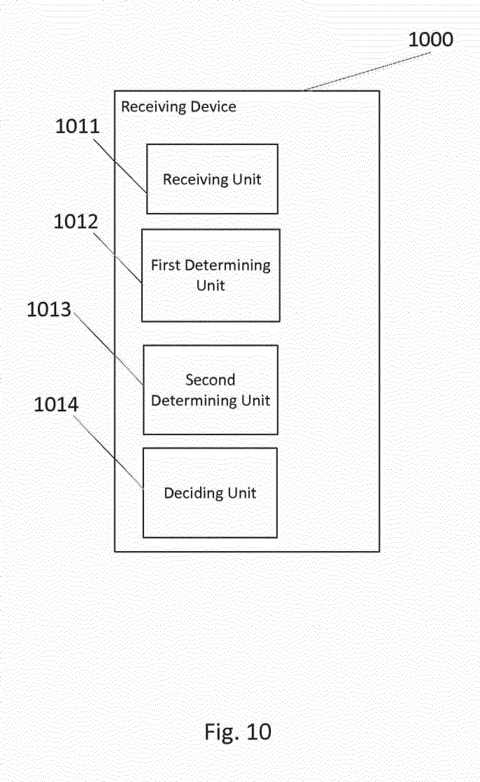

Fig. 10 illustrates an apparatus 1000 according to another embodiment. In an embodiment, apparatus 1000 can be a receiving device. Apparatus 1000 can also include a receiving unit 1011 that receives at least one channel state information reference symbol. The apparatus 1000 can also include a first determining unit 1012 that determines a negative timing offset estimate and a positive timing offset estimate. The negative timing offset estimate and the positive timing offset estimate are based on the at least one channel state information reference symbol. The apparatus 1000 can also include a second determining unit 1013 that determines a received signal-to-noise ratio. The apparatus 1000 can also include a deciding unit 1014 that decides whether or not to use a demodulation reference symbol to select between the negative timing offset estimate and the positive timing offset estimate. The deciding is based on whether the signal-to-noise ratio is greater than a predetermined value.

The described features, advantages, and characteristics of the invention can be combined in any suitable manner in one or more embodiments. One skilled in the relevant art will recognize that the invention can be practiced without one or more of the specific features or advantages of a particular embodiment. In other instances, additional features and advantages can be recognized in certain embodiments that may not be present in all embodiments of the invention. One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the spirit and scope of the invention.

**Claims**

1. A method, comprising:

   receiving at least one channel state information reference symbol;
   determining a negative timing offset estimate and a positive timing offset estimate, wherein the negative timing offset estimate and the positive timing offset estimate are based on the at least one channel state information reference symbol;
   receiving a demodulation reference symbol; and
   selecting either the negative timing offset estimate or the positive timing offset estimate based on the demodulation reference symbol.

2. The method according to claim 1, wherein the negative timing offset estimate is in a first range corresponding to

$[t_{max-}, 0]$, and the positive timing offset estimate is in a second range corresponding to $[0, t_{max+}]$, where $[t_{max-}, t_{max+}]$ determines a maximum timing range.

3. The method according to claim 1, wherein the selecting either the negative timing offset estimate or the positive timing offset estimate is based upon comparing a first mean square error corresponding to the negative timing offset estimate and a second mean square error corresponding to the positive timing offset estimate.

4. The method according to claim 1, wherein the determining the negative timing offset estimate and the positive timing offset estimate comprises removing a pilot sequence across frequency and undoing a Walsh spreading between port pairs.

5. The method according to claim 1, wherein the determining the negative timing offset estimate and the positive timing offset estimate comprises obtaining at least one power delay profile, finding peaks of the at least one power delay profile, wherein the negative timing offset estimate and the positive timing offset estimate are associated with the peaks.

6. An apparatus, comprising:

   at least one processor; and
   at least one memory including computer program code,
   the at least one memory and the computer program code configured, with the at least one processor, to cause the apparatus at least to
   receive at least one channel state information reference symbol;
   determine a negative timing offset estimate and a positive timing offset estimate, wherein the negative timing offset estimate and the positive timing offset estimate are based on the at least one channel state information reference symbol;
   receive a demodulation reference symbol; and
   select either the negative timing offset estimate or the positive timing offset estimate based on the demodulation reference symbol.

7. The apparatus according to claim 6, wherein the negative timing offset estimate is in a first range corresponding to $[t_{max-}, 0]$, and the positive timing offset estimate is in a second range corresponding to $[0, t_{max+}]$, where $[t_{max-}, t_{max+}]$ determines a maximum timing range.

8. The apparatus according to claim 6, wherein the selecting either the negative timing offset estimate or the positive timing offset estimate is based upon comparing a first mean square error corresponding to the negative timing offset estimate and a second mean square error corresponding to the positive timing offset estimate.

9. The apparatus according to claim 6, wherein the determining the negative timing offset estimate and the positive timing offset estimate comprises removing a pilot sequence across frequency and undoing a Walsh spreading between port pairs.

10. The apparatus according to claim 6, wherein the determining the negative timing offset estimate and the positive timing offset estimate comprises obtaining at least one power delay profile, finding peaks of the at least one power delay profile, wherein the negative timing offset estimate and the positive timing offset estimate are associated with the peaks.

11. A method, comprising:

    receiving at least one channel state information reference symbol;
    determining a negative timing offset estimate and a positive timing offset estimate, wherein the negative timing offset estimate and the positive timing offset estimate are based on the at least one channel state information reference symbol;
    determining a received signal-to-noise ratio; and
    deciding whether or not to use a demodulation reference symbol to select either the negative timing offset estimate or the positive timing offset estimate, wherein the deciding is based on whether the signal-to-noise ratio is greater than a predetermined value.

**12.** The method according to claim 11, wherein the negative timing offset estimate is in a first range corresponding to $[t_{max-}, 0]$, and the positive timing offset estimate is in a second range corresponding to $[0, t_{max+}]$, where $[t_{max-}, t_{max+}]$ determines a maximum timing range.

**13.** The method according to claim 11, wherein the determining the negative timing offset estimate and the positive timing offset estimate comprises removing a pilot sequence across frequency and undoing a Walsh spreading between port pairs.

**14.** An apparatus, comprising:

at least one processor; and
at least one memory including computer program code,
the at least one memory and the computer program code configured, with the at least one processor, to cause the apparatus at least to
receive at least one channel state information reference symbol;
determine a negative timing offset estimate and a positive timing offset estimate, wherein the negative timing offset estimate and the positive timing offset estimate are based on the at least one channel state information reference symbol;
determine a received signal-to-noise ratio; and
decide whether or not to use a demodulation reference symbol to select either the negative timing offset estimate or the positive timing offset estimate, wherein the deciding is based on whether the signal-to-noise ratio is greater than a predetermined value.

**15.** The apparatus according to claim 14, wherein the negative timing offset estimate is in a first range corresponding to $[t_{max-}, 0]$, and the positive timing offset estimate is in a second range corresponding to $[0, t_{max+}]$, where $[t_{max-}, t_{max+}]$ determines a maximum timing range.

**16.** The apparatus according to claim 14, wherein the determining the negative timing offset estimate and the positive timing offset estimate comprises removing a pilot sequence across frequency and undoing a Walsh spreading between port pairs.

Fig. 1

Fig. 2

Fig. 3

Fig. 4

Fig. 5

Fig. 6

Receive at least one channel state information reference symbol — 710

Determine a negative timing offset estimate and a positive timing offset estimate — 720

Receiving a demodulation reference symbol — 730

Selecting either the negative timing offset estimate or the positive timing offset estimate — 740

Fig. 7

10

Transceiver
28

Processor
22

Operating
System
15

Other Functional
Modules or
Applications
18

Memory 14

Fig. 8

Fig. 9

EP 2 806 611 A1

1000

Receiving Device

1011

Receiving Unit

1012

First Determining Unit

1013

Second Determining Unit

1014

Deciding Unit

Fig. 10

Europäisches
Patentamt

European
Patent Office

Office européen
des brevets

**EUROPEAN SEARCH REPORT**

Application Number

EP 14 16 9198

| | **DOCUMENTS CONSIDERED TO BE RELEVANT** | | | |
|---|---|---|---|---|
| Category | Citation of document with indication, where appropriate, of relevant passages | | Relevant to claim | CLASSIFICATION OF THE APPLICATION (IPC) |
| X | NOKIA SIEMENS NETWORKS ET AL: "Signaling quasi co-location between CRS and CSI-RS", 3GPP DRAFT; R1-125257, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. New Orleans, USA; 20121112 - 20121116 13 November 2012 (2012-11-13), XP050663112, Retrieved from the Internet: URL:http://www.3gpp.org/ftp/tsg_ran/WG1_RL 1/TSGR1_71/Docs/ [retrieved on 2012-11-13] * the whole document * ----- | | 1-16 | INV. H04L27/26 |
| | | | | TECHNICAL FIELDS SEARCHED (IPC) |
| | | | | H04L |

| The present search report has been drawn up for all claims | | |
|---|---|---|
| Place of search | Date of completion of the search | Examiner |
| Munich | 12 August 2014 | Murcia Martinez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                   
& : member of the same patent family, corresponding document

EPO FORM 1503 03.82 (P04C01)